# EUROPÄISCHE PATENTSCHRIFT

(11) **EP 0 583 285 B1**
(45) Veröffentlichungstag und Bekanntmachung des Hinweises auf die Patenterteilung: **18.06.1997**
(21) Anmeldenummer: 92909169.2
(22) Anmeldetag: 28.04.1992
(51) Int. Cl.: C09K 7/06, B01F 17/18

(54) **VERWENDUNG AUSGEWÄHLTER OLEOPHILER VERBINDUNGEN MIT QUARTÄREM STICKSTOFF ZUR VERBESSERUNG DER ÖLBENETZBARKEIT FEINTEILIGER TONE UND DEREN ANWENDUNG ALS VISKOSITÄTSBILDNER**
USE OF SELECTED OLEOPHILIC COMPOUNDS WITH QUATERNARY NITROGEN TO IMPROVE THE OIL WETTABILITY OF FINELY DIVIDED CLAY AND THEIR USE AS VISCOSITY PROMOTERS
UTILISATION DE COMPOSES OLEOPHILES SELECTIONNES AVEC DE L'AZOTE QUATERNAIRE POUR AMELIORER LA MOUILLABILITE PAR L'HUILE DE GLAISES FINES ET UTILISATION DE CES GLAISES COMME AGENTS DE VISCOSITE

(30) Priorität: 07.05.1991 DE 4114906
(43) Veröffentlichungstag der Anmeldung: 23.02.1994
(73) Patentinhaber: Henkel Kommanditgesellschaft auf Aktien, 40191 Düsseldorf (DE)
(72) Erfinder: PONSATI, Oriol, E-08025 Barcelona (ES); TRIUS, Antonio, E-08190 Sant Cugat (ES); HEROLD, Claus-Peter, D-4020 Mettmann (DE); MÜLLER, Heinz, D-4019 Monheim (DE); NITSCH, Christian, D-4000 Düsseldorf 13 (DE); VON TAPAVICZA, Stephan, D-4006 Erkrath (DE)
(86) Internationale Anmeldenummer: EP9200920
(87) Internationale Veröffentlichungsnummer: WO9219693

(56) Entgegenhaltungen:
- EP-A- 0 034 726
- EP-A- 0 133 071
- EP-A- 0 245 157
- EP-A- 0 382 070
- EP-A- 0 386 636
- WO-A-90/09417
- WO-A-91/01295
- GB-A- 2 108 175
- US-A- 3 915 867

## Beschreibung

Die Erfindung betrifft neue Möglichkeiten zur Beeinflussung und Steuerung der Rheologie nichtwäßriger Flüssigphasen und ermöglicht insbesondere einen gesteuerten thixotropen Viskositätsaufbau in Flüssigkeiten dieser Art.

Der vorbestimmbaren Regulierung des rheologischen Verhaltens nichtwäßriger Flüssigphasen kommt auf zahlreichen Gebieten der Technologie beträchtliche Bedeutung zu. Ein bedeutendes Beispiel hierfür sind die heute in großem Umfange eingesetzten Bohrspülungen auf Basis sogenannter Invert-Emulsionen, die in einer geschlossenen Ölphase eine disperse wäßrige Phase enthalten. Ein wichtiges Einsatzgebiet für solche Bohrspülsysteme sind off-shore-Bohrungen zur ErschlieBung von Erdöl- und/oder Erdgasvorkommen. Heute finden solche W/O-Emulsionen als Bohrspülsysteme aber auch ganz allgemein Verwendung bei landgestützten Bohrungen, beispielsweise beim Geothermiebohren, beim Wasserbohren, bei der Durchführung geowissen-schaftlicher Bohrungen und bei Bohrungen im Bergbaubereich.

Die Erfindung betrifft in einer wichtigen Ausführungsform verbesserte Bohrspülungen dieses Typs der W/O-Invert-Systeme, so daß im nachfolgenden insbesondere auf dieses Einsatzgebiet Bezug genommen wird, wenn auch die Erfindung keineswegs hierauf eingeschränkt ist. Bohrspülsysteme der hier betroffenen Art enthalten gelöst und/oder dispergiert in fließfähigen Ölphasen ausgewählter Rheologie eine Mehrzahl von Zusatzstoffen, deren Gegenwart die Brauchbarkeit des jeweiligen Systems unter Praxisbedingungen erst sicherstellt. Verwiesen wird auf die einschlägige Fachliteratur, beispielsweise auf die Veröffentlichung Adam T. Bourgoyne Jr. et al. APPLIED DRILLING ENGINEERING, SPE TEXTBOOK SERIES, VOL. 2, SOCIETY OF PETROLEUM ENGINEERS, Richardson, TX 1986, dort insbesondere das Unterkapitel 2.5 Oil Muds, a.a.O. Seiten 75 bis 81.

In der heutigen Praxis werden als Rheologie-regulierende Zusätze für nichtwäßrige Bohrspülungen hydrophobierte Schichtsilikate aus der Gruppe der Bentonite verwendet. Solche Produkte sind beispielsweise unter der Sammelbezeichnung "Bentone^{R}" kommerziell erhältlich. Die zum Einarbeiten in die wenig bis unpolare Trägerflüssigkeit notwendige Hydrophobierung der Tone erfolgt üblicherweise mit quartären Ammoniumsalzen, deren organische Kationen sich über elektrostatische Wechselwirkungen mit den negativ geladenen Schichtsilikatplättchen verbinden. Solche Produkte sind zwar technisch befriedigend, unter ökologischen Gesichtspunkten müssen sie jedoch als problematisch angesehen werden: Die heute zum Hydrophobieren verwendeten quartären Ammoniumsalze sind abbau-resistent und zeigen im allgemeinen biozide Wirkungen, so daß Umweltschäden nicht ausgeschlossen werden können.

In der GB-A-2108175 werden ölbasierte Flüssigkeiten beschrieben, die als organophile Gelbildner Reaktionsprodukte von organischen kationischen Verbindungen mit Tonen vom Smectit-Typ enthalten. Als kationische Verbindungen kommen unter anderem quartäre Ammonium-Verbindungen vom Typ [NR₁R₂R₃R₄]⁺ in Frage, wobei mindestens einer der Reste R aus Hydroxyalkylgruppen mit 2 bis 6 C-Atomen besteht. Derartige ölbasierte Flüssigkeiten können beispielsweise als Bohrspülmittel Verwendung finden.

Die EP-A-0 133 071 beschreibt organophil ausgerüstete Smectit-Tone zur Modifizierung der rheologischen Eigenschaften von nicht-wäßrigen Systemen. Zur organophilen Ausrüstung werden hierbei unter anderem quartäre Ammoniumsalze eingesetzt, die mindestens einen Rest, bestehend aus Oxalkylgruppen mit jeweils 2 bis 6 C-Atomen, aufweisen.

Die Erfindung geht von der Aufgabe aus, ökologisch weniger bedenkliche, in der technischen Praxis aber mindestens gleichwertige Ersatzstoffe für die Beeinflussung und Steuerung der Rheologie solcher nichtwäßriger Flüssigphasen bereitzustellen. Die technische Lösung dieser Aufgabe geht von der Erkenntnis aus, daß eine ausgewählte, an sich seit längerem bekannte Unterklasse quartärer Ammoniumverbindungen befähigt ist, die technischen Anforderungen an die oleophile Ausrüstung solcher Tone und damit die technischen Anforderungen bei deren Einsatz in Ölphasen zu erfüllen, daß aber weiterhin diese ausgewählte Unterklasse quartärer Ammoniumverbindungen sich durch hohe Umweltverträglichkeit auszeichnet. Die erfindungsgemäß eingesetzte und im nachfolgenden ausführlich geschilderte Unterklasse aus der Gruppe quartärer Ammoniumverbindungen leitet sich von Alkylolaminverbindungen ab, deren Hydroxylgruppen mit Carbonsäuren voll- oder teil- verestert sind und auf diese Weise ein Molekül mit ausgeprägt oleophilen Eigenschaften bilden. Verbindungen der erfindungsgemäß betroffenen Art werden im nachfolgenden auch als "Esterquats" bezeichnet. Sie zeichnen sich durch hinreichende Stabilität in ihrer Anwendung und beim Gebrauch der damit ausgerüsteten Tone aus, gleichzeitig sind sie jedoch - vermutlich aufgrund ihrer Estergruppierungen - im belebten biologischen System so hinreichend instabil, daß auf dem erfindungsgemäß betroffenen Arbeitsgebiet oleophil ausgerüsteter Tone bisher nicht bekannte ökologische Verträglichkeiten eingestellt werden können. Insbesondere gilt das auch für den bekanntlich besonders sensitiven marinen Bereich, so daß durch die Lehre der Erfindung die Zielvorstellung weiter optimiert werden kann, beim Arbeiten mit W/O-Invertemulsionen, beispielsweise als Bohrspülung in seegestützten Bohrungen, ökologisch schädliche Auswirkungen zu verhindern.

### Die erfindungsgemäße Lehre

Gegenstand der Erfindung ist dementsprechend in einer ersten Ausführungsform die Verwendung von quaternierten oleophilen Estern aus Alkylolaminen und Carbonsäuren mit wenigstens 8 C-Atomen im Carbonsäure-Molekül (Esterquats) zur Hydrophobierung und Ausbildung der Ölbenetzbarkeit natürlicher und/oder synthetischer Tone für deren Einsatz in ölbasierten Flüssigphasen, insbesondere als Viskositätsbildner in fließfähigen Bohrhilfsmitteln vom Typ der W/O-Invertemulsionen.

In einer weiteren Ausführungsform betrifft die Erfindung öldispergierbare Verdickungsmittel und gegebenenfalls weitere Inhaltsstoffe enthaltende W/O-Invertemulsionen, insbesondere entsprechende Bohrlochbehandlungsmittel, die im Rahmen der land- und/oder seegestützten Gesteinserbohrung Verwendung finden können und dadurch gekennzeichnet sind, daß sie als öldispergierbare Verdickungsmittel feinteilige und mit den zuvor definierten Esterquats behandelte synthetische und/oder natürliche Tone enthalten.

Die Erfindung betrifft schließlich die mit den dargestellten Esterquats ausgerüsteten feinteiligen Tone natürlichen und/oder synthetischen Ursprungs, insbesondere entsprechende quellfähige Tone des Montmorillonit-Typs. Das klassische Beispiel für entsprechende Tone natürlichen Ursprungs sind die Bentonite, während synthetische, mehr oder weniger stark quellfähige Tonverbindungen der hier betroffenen Art insbesondere auch der Klasse der Smectite, z.B. den Hectoriten zuzuordnen sind. Die Beladung dieser Toneinsatzmaterialien mit den erfindungsgemäß ausgewählten Esterquats zur öldispergierbaren und rheologisch wirksamen Verdickerkomponente kann in an sich bekannter Weise erfolgen, so wie nach der bisherigen Praxis die entsprechenden Tone mit den bis heute üblichen quartären Ammoniumverbindungen ausgerüstet werden.

### Einzelheiten zu den erfindungsgemäß ausgewählten Esterquats

Die Klasse der Kondensationsprodukte von Alkylolaminen und höheren Fettsäuren, die mit üblichen Quaternisierungsmitteln wie Dimethylsulfat, Diethylsulfat, Methylhalogeniden wie Methylchlorid und dergleichen quaterniert worden sind, sowie ausgewählte Einsatzzwecke für Verbindungen dieser Art sind bekannt. Verwiesen wird beispielsweise auf die US-A-3 915 867, in der beschrieben wird, daß diese Stoffklasse als Textilweichmacher und gegebenenfalls als oberflächenaktives Mittel grundsätzlich bekannt ist. Die Lehre dieser US-Patentschrift wählt für den Zweck der Textilweichmachung bestimmt eingegrenzte Verbindungen der hier betroffenen Art aus, die das Anforderungsprofil an den dort beschriebenen Einsatzzweck besonders gut erfüllen. Bei der ausgewählten Stoffklasse handelt es sich um N-Alkyl-N,N-di(ß-C₁₄-C₁₈-acyloxy-ethyl)-N-ß-hydroxy-ethylquartäre Ammoniumverbindungen.

Die erfindungsgemäße Lehre umfaßt Esterquats dieser Art, sie ist darauf jedoch nicht eingeschränkt. Verständlich ist das aus dem unterschiedlichen Anforderungsprofil, das einerseits von einem Textilweichmacher, andererseits aber von einer oleophilen Ton-Ausrüstung für technische Einsatzzwecke im Sinne der erfindungsgemäßen Lehre gefordert wird. Irgendwelche Hinweise auf die Eignung der Klasse der Esterquats für die erfindungsgemäße Aufgabenstellung der insbesondere ökologisch verbesserten oleophilen Ausrüstung von Viskositätsbildnern auf Basis quellfähiger Tone für insbesondere geschlossene Ölphasen finden sich im Stand der Technik nicht.

Erfindungsgemäß werden Esterquats bevorzugt, deren esterbildende Säurereste sich von Monocarbonsäuren mit wenigstens 12 C-Atomen ableiten. Geeignet sind hier insbesondere ausgesprochen oleophile langkettige Carbonsäuren bzw. Carbonsäurereste mit beispielsweise bis zu 32 C-Atomen, insbesondere mit bis zu 24 C-Atomen. Die Carbonsäurereste können auch ein- oder mehrfach olefinisch ungesättigt sein, wobei in den Esterquats gleiche oder auch eine Mischung von unterschiedlichen Carbonsäureresten vorliegen können.

In einer bevorzugten Ausführungsform der Erfindung liegen in den Esterquats Reste geradkettiger Carbonsäuren vor. Die ökologische Verträglichkeit solche Säurereste, ausgedrückt als aerobe und/oder anaerobe Abbaubarkeit, ist bekanntlich besonders hoch. Bevorzugte Säuren bzw. Säurereste in den Esterquats sind im Sinne der erfindungsgemäßen Lehre natürlichen Ursprungs, wobei hier beliebige gesättigte und/oder ungesättigte Säuregemische des Bereichs von C₁₂ bis C₂₂ leicht zugängliche und besonders wirkungsvolle Vertreter sind. Bekannte Ausgangsmaterialien für die Gewinnung dieser Monocarbonsäuren sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch ein- und gegebenenfalls mehrfach ungesättigte Carbonsäuren des Bereichs von C₁₆ bis C₂₄, sind beispielsweise Palmöl, Erdnußöl, Rizinusöl, Sonnenblumenöl und insbesondere Rüböl. Carbonsäuren tierischen Ursprungs dieser Art sind insbesondere entsprechende Gemische aus Talg und/oder Fischölen wie Heringsöl.

In den erfindungsgemäß zu verwendenden Esterquats sind diese Carbonsäurereste in Esterform gebunden an und über die Hydroxylgruppe der Alkylolamine. Dabei sind Alkylolamine bevorzugt, die mehr als eine Hydroxylgruppe im Ausgangsmolekül aufweisen; besonders geeignet sind entsprechende Alkylolamine als Baustein, die bis zu 5 und vorzugsweise 2 oder 3 Hydroxylgruppen für eine potentielle Veresterung mit den oleophilen Monocarbonsäuren zur Verfügung stellen können. Dabei kann es wünschenswert sein, daß in dem veresterten Alkylolamin mehr als ein Carbonsäurerest gebunden ist, wobei es allerdings nicht erforderlich ist, daß alle Hydroxylgruppen des eingesetzten Alkylolamins mit den Carbonsäureresten abreagiert sind. So können entsprechende Ester besonders geeignet sein, die - in Abhängigkeit von der zur Verfügung stehenden Anzahl freier Hydroxylgruppen im eingesetzten Alkylolamin - 2 bis 4 und insbesondere 2 oder 3 Carbonsäurereste aufweisen. Werden beispielsweise Alkylolamine mit 3 Hydroxylgruppen als Esterquat bildender Baustein verwendet, so können deren Veresterungsprodukte besonders zweckmäßig sein, die in überwiegender Menge 2 Hydroxylgruppen mit den Monocarbonsäuren verestert enthalten, daneben aber in statistischer Verteilung einfach und dreifach veresterte Reste des Alkylolamins aufweisen.

Zur Definition des Grundbausteins der Alkylolamine gelten die nachfolgenden Angaben: Bevorzugt werden im Rahmen der Erfindung Esterquats eingesetzt, die sich von Alkylolaminen mit bis zu 15 C-Atomen und vorzugsweise mit bis zu 8 C-Atomen im Molekül ableiten. Dabei kann die N-Funktion einfach oder auch mehrfach im Alkylolamin vorliegen. Zweckmäßigerweise enthalten die Alkylolamine nicht mehr als drei N-Gruppen, wobei solche Verbindungen dieser Art besonders bevorzugt sind, die nur eine N-Gruppe im Molekül aufweisen. Hiervon leitet sich dann letztlich die Klasse der wichtigsten Esterquats im Sinne der Erfindung ab, die im Molekül eine tertiäre N-Gruppe enthalten.

Sowohl aus Gründen der technischen Zugänglichkeit als auch aus Gründen der ökologischen Verträglichkeit und insbesondere der biologischen Abbaubarkeit sind dabei Alkylolamine für die Herstellung der Esterquats bevorzugt, deren Alkylolreste geradkettig und mit endständiger Hydroxylgruppe ausgebildet sind. Die technisch am einfachsten zugänglichen Vertreter dieser Verbindungsklasse enthalten entsprechende Ethanolreste, so daß Esterquats auf Basis von Ethanolaminverbindungen besondere Bedeutung zukommt. Hier wiederum ist das Triethanolamin (TEA) als Grundbaustein der bevorzugte Vertreter, dessen Hydroxylgruppen mit den Carbonsäuren voll- oder teil- verestert sind. Entsprechende Mischester mit einem überwiegenden Anteil an zwei Carbonsäureresten im Molekül, die in untergeordneter Menge einfach verestertes und dreifach verestertes Triethanolamin enthalten, können besonders geeignete Einsatzmaterialien für die Quaternisierung und damit für die Ausrüstung der Tone mit den Esterquats sein.

Die Quaternisierung der Alkylolaminester erfolgt in an sich bekannter Weise beispielsweise durch Umsetzung mit Alkylhalogeniden, Dialkylsulfaten und dergleichen. Dimethylsulfat oder Methylchlorid sind charakteristische bekannte Vertreter für diese Reaktion, zu der im übrigen auf das allgemeine chemische Wissen verwiesen wird.

### Die erfindungsgemäß oleophil auszurüstenden Tone

Geeignete Tonmaterialien, insbesondere kolloidal lösliche und/oder dispergierbare Tone natürlichen und synthetischen Ursprungs, sind Gegenstand umfangreicher Druckschriften, so daß darauf verwiesen werden kann.

Zu natürlichen Tonen und ihrer Interaktion mit Ölphasen, insbesondere ihrer Belegung mit quartären Ammoniumverbindungen, wird verwiesen auf die Veröffentlichung "Clay Colloid Chemistry" H. van Olphen, John Wiley and Sons, 2. Ausgabe (1977), dort insbesondere das Kapitel 11 "Interaction of Clays and Organic Compounds" a.a.O. Seiten 162-200. Wie bereits angegeben, ist das wichtigste Toneinsatzmaterial für großtechnische Zwecke der quellfähige Bentonit natürlichen Ursprungs, dessen oleophile Ausrüstung auch im Sinne der erfindungsgemäßen Lehre eine bevorzugte Ausführungsform ist.

Synthetische Toneinsatzmaterialien sind insbesondere wasserquellbare Smectit-Tone, beispielsweise hochquellfähige Hectorite, Saponite und/oder Saponit-Hectorit-Hybride. Geeignet können aber auch Tone von der Art Attapulgit oder Sepiolit sein.

Die Synthese von Schichtsilikaten, insbesondere von Hectoriten, ist in der Literatur vielfach beschrieben worden (H. Strese und U. Hoffmann, Z. Anorg. Allg. Chem. 247 (1941) 65-95; W.I. Grandquist und S.S. Pollack in "Clays and Clay Minerals" Natl. Acad. Sci., Natl. Res. Council Publ. 8 (1960) 150-169; DE-B-1 667 502). Eine jüngere Literaturstelle beschäftigt sich ausführlich mit den heute vorliegenden Erkenntnissen zur Struktur, Genese und Herstellung von Hectorit, vgl. hierzu Karl-Heinz Bergk et al. Chem. Techn. 41. Jg., Heft 6, 245-251. In dieser zuletzt genannten Literaturstelle wird insbesondere auch auf die Möglichkeit der oleophilen Ausrüstung dieser synthetischen Mineralien verwiesen (vgl. a.a.O. S. 250).

Zum Mechanismus des Auftrages der quartären Ammoniumverbindungen auf das jeweils auszurüstende Tonmineral kann ebenfalls auf den umfangreichen druckschriftlichen Stand der Technik verwiesen werden, wie er im einzelnen dargestellt ist in der zitierten Literaturstelle H. van Olphen "Clay Colloid Chemistry", 171-173 und insbesondere die Veröffentlichungen zu Ziffern 15-36 aus der Referenzliste dieses Unterkapitels.

### Die Anwendung der mit Esterquats ausgerüsteten Tone in Ölphasen, insbesondere W/O-Invertemulsionen

Mit Esterquats oleophil ausgerüstete Tone können im Sinne der Erfindung in breitestem Anwendungsbereich eingesetzt werden. Vorteilhaft ist, daß umfangreiche Untersuchungen nicht nur eine hohe ökologische Verträglichkeit im Sinne befriedigender Abbaubarkeit unter aeroben und anaeroben Bedingungen gezeigt haben; es ist darüber hinaus festgestellt worden, daß beispielsweise Esterquats auf Basis der TEA-Abkömmlinge mit Fettsäuren natürlichen Ursprungs auch keine Hautirritationen am lebenden Körper auslösen. Aus den zahlreichen sich daraus ableitenden Anwendungszwecken für solche oleophil ausgerüsteten Tone und ihren Einsatz als Verdickungsmittel in Ölphasen wird im nachfolgenden beispielhaft die Anwendung auf dem Gebiet der Bohrlochbehandlungsmittel, insbesondere der Bohrspülmittel für die Gesteinserbohrung, dargestellt.

Ölbasierte Spülungssysteme, bei denen das Öl die fließfähige Phase oder doch wenigstens den überwiegenden Anteil der fließfähigen Phase bildet, sind in breitem Umfang im praktischen Einsatz. Besondere Bedeutung haben hier die sogenannten Invert-Bohrspülschlämme, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%. Die wäßrige Phase ist dabei heterogen fein-dispers in der geschlossenen Ölphase verteilt. Es ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P.A. Boyd et al. "New Base Oil Used in Low-Toxicity Oil Muds" Journal of Petroleum Technology, 1985, 137-142 sowie R.B. Bennett "New Drilling Fluid Technology - Mineral Oil Mud" Journal of Petroleum Technology, 1984, 975-981 sowie die darin zitierte Literatur.

Die Ölphasen von Bohrspülungen der hier geschilderten Art und vergleichsweise aufgebauten anderen Bohrlochbehandlungsmitteln werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen.

Die vorliegende Erfindung betrifft in einer bevorzugten Ausführungsform solche W/O-Invertemulsionen, die zur Verwendung als im Temperaturbereich von 5 bis 20 °C fließ- und/oder pumpfähige Bohrlochbehandlungsmittel, insbesondere Bohrspülungen, ausgerüstet sind und deren geschlossene Ölphase aus ökologisch verträglichen Ölen, insbesondere aromatenfreien Mineralölen, oleophilen Estern, oleophilen Ethern und/oder oleophilen Alkoholen gebildet ist.

Die Anmelderin beschreibt in einer größeren Zahl älterer Schutzrechte Vorschläge zum Austausch der Mineralölfraktionen gegen ökologisch verträgliche, leicht abbaubare Ölphasen. Dabei werden vier unterschiedliche Typen von Austauschölen dargestellt, die auch in Mischung miteinander eingesetzt werden können. Es handelt sich hierbei um ausgewählte oleophile Monocarbonsäureester und entsprechende Polycarbonsäureester, um wenigstens weitgehend wasserunlösliche unter Arbeitsbedingungen fließfähige Alkohole, um entsprechende Ether und um ausgewählte Kohlensäureester. Summarisch wird hier verwiesen auf die veröffentlichten und älteren Anmeldungen DE-A-38 42 659, DE-A-38 42 703, DE-A-39 07 391, DE-A-39 07 392, DE-A-39 03 785, DE-A-39 03 784, DE-A-39 11 238, DE-A-39 11 299, DE-A-40 19 266 und DE-A-40 18 228. Alle hier genannten Anmeldungen betreffen das Gebiet Öl-basierter Bohrspülsysteme, insbesondere vom W/O-Inverttyp.

In einer bevorzugten Ausführungsform der Erfindung erfolgt die Viskositätsregulierung solcher ökologisch verträglichen und durch natürliche Abbauprozesse abbaubaren Ölphasen mittels der erfindungsgemäß beschriebenen und unter Einsatz von Esterquats oleophil eingestellten Tone.

In einer weiteren Ausführungsform sieht die Erfindung die nachfolgende Modifikation vor, die ebenfalls der Zielvorstellung dient, ökologisch verbesserte Arbeitsmittel des hier betroffenen Bereiches zur Verfügung zu stellen:

Gegenstand der älteren Anmeldung DE-A-40 12 105 der Anmelderin ist die Verwendung von hydriertem Rizinusöl anstelle organophiler quaternierter Tone zur Viskositätskontrolle und insbesondere zum spontanen Viskositätsaufbau in Öl-basierten Bohrspülungen für die Erschließung geologischer Vorkommen. Erfindungsgemäß kann jetzt eine Kombination der Viskositätsbildner auf Basis der mit Esterquats oleophil ausgerüsteten Tone und des hydrierten Rizinusöls eingesetzt werden, wobei hier praktisch beliebige Mischungsverhältnisse von beispielsweise 5 bis 95 Gew.-% beider Komponenten eingestellt werden können. In einer bevorzugten Ausführungsform werden wenigstens etwa mengengleiche Anteile an mit Esterquats oleophil ausgerüsteten Tonen zusammen mit dem hydrierten Rizinusöl verwendet.

In einer weiterhin besonders bevorzugten Ausführungsform wird der erfindungsgemäßen Zielsetzung erhöhter ökologischer Verträglichkeit in den Bohrlochbehandlungsmitteln vom W/O-Typ zusätzlich dadurch Rechnung getragen, daß gleichzeitig ökologisch verträgliche Emulgatoren eingesetzt werden. Auch hier kann auf eine Reihe älterer Schutzrechte der Anmelderin verwiesen werden, deren Mitverwendung im Rahmen der erfindungsgemäßen Lehre die angestrebten Vorteile mit sich bringt.

Geeignete Emulgatoren sind in diesem Sinne insbesondere oberflächenaktive Alkylglykosidverbindungen, wie sie in der DE-A-40 24 658 beschrieben sind, oberflächenaktive alpha-Sulfofettsäuren-di-Salze gemäß der DE-A-40 24 659, oberflächenaktive Estersulfonat-Salze gemäß der DE-A-40 24 892 sowie oberflächenaktive Carbonsäure-Komplexester als Emulgatoren gemäß der DE-A-41 02 908. Der Offenbarungsgehalt auch dieser älteren Schutzrechte wird hiermit ausdrücklich auch zum Gegenstand der vorliegenden Erfindungsoffenbarung gemacht.

Einheitlich gilt allerdings für alle erfindungsgemäß zu verwendenden Ölphasen bzw. Ölmischphasen, daß Flammpunkte von wenigstens 100 °C und vorzugsweise Flammpunkte oberhalb 135 °C aus Sicherheitsgründen im Betrieb gefordert werden. Deutlich darüberliegende Werte, insbesondere solche oberhalb 150 °C, können besonders zweckmäßig sein. Weiterhin gilt, daß die oleophilen Tone auf Basis Esterquat in fließ- und pumpfähigen Invertsystemen mit geschlossenen Ölphasen zum Einsatz kommen, die Erstarrungswerte (Fließ- und Stockpunkt der Ölphase) unterhalb 0 °C, vorzugsweise unterhalb -5 °C aufweisen und dabei im Temperaturbereich von 0 bis 5 °C eine Brookfield-(RVT)-Viskosität nicht über 50 mPas, vorzugsweise nicht über 40 mPas, besitzen. Einheitlich gilt weiterhin für die verschiedenen potentiell Hydrolyse-gefährdeten Ölphasen, die im erfindungsgemäßen Rahmen eingesetzt werden können, daß das Erfordernis der ökologischen Verträglichkeit nicht nur für die Einsatzverbindung, also beispielsweise das jeweils gewählte Esteröl oder Gemisch von Esterölen erfüllt ist, sondern daß auch bei einer partiellen Verseifung im praktischen Einsatz keine toxikologischen und insbesondere kein Inhalations-toxikologischen Gefährdungen ausgelöst werden. Es ist im Rahmen der genannten älteren Anmeldungen ausführlich geschildert, daß hier insbesondere die verschiedenen Vertreter der Esteröle angesprochen sind, wobei hier wiederum monofunktionellen Alkoholen aus der Esterbildung besondere Bedeutung zukommt. Monofunktionelle Alkohole sind im Vergleich zu polyfunktionellen Alkoholen in ihren niederen Gliedern hochflüchtig, so daß durch eine Partialhydrolyse hier sekundäre Gefährdungen auftreten könnten. Bevorzugt sind dementsprechend in den Klassen der verschiedenen Esteröle mitverwendete monofunktionelle Alkohole bzw. die entsprechenden Reste dieser Alkohole so gewählt, daB sie im Molekül wenigstens 6 C-Atome, vorzugsweise wenigstens 8 C-Atome, besitzen. Hydrolyse-stabile Ether können für den praktischen Einsatz als geschlossene Ölphase der Bohrlochbehandlungsmittel besonders wichtig sein.

Für Invert-Bohrspülungen der erfindungsgemäß betroffenen Art gilt unabhängig von der bestimmten Beschaffenheit der geschlossenen Ölphase, daß sie in bevorzugten Ausführungsformen eine Plastische Viskosität (PV) im Bereich von 10 bis 60 mPas und eine Fließgrenze (Yield Point YP) im Bereich von 5 bis 40 lb/100 ft² (=2,39 bis 19,15 Pa) - jeweils bestimmt bei 50 °C - aufweisen.

Als ökologisch verträgliche und bei niederen Temperaturen gut fließfähige Ölphasen haben sich neben Ethern aus Alkoholen natürlichen und/oder synthetischen Ursprungs insbesondere Esteröle von Monocarbonsäuren erwiesen, die dann in einer bevorzugten Ausführungsform der Erfindung sich aus wenigstens einer der nachfolgenden Unterklassen ableiten:
a) Ester aus C₁₋₅-Monocarbonsäuren und ein- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und ein- und/oder mehrfunktionellen Alkoholen der unter a) genannten Art,
c) Ester olefinisch ein- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Fette und/oder Öle. Genannt seien auch hier wieder Talg, Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch ein- und gegebenenfalls mehrfach ungesättigte Carbonsäuren des Bereichs von C₁₆-C₂₄ sind beispielsweise Palmöl, Erdnußöl, Rizinusöl, Sonnenblumenöl und insbesondere Rüböl. Aber auch synthetisch gewonnene Komponenten sind sowohl auf der Carbonsäureseite als auch auf der Seite der Alkohole wichtige Strukturelemente für ökologisch verträgliche Ölphasen.

### Additive in der Öl-basierten Spülung

Invert-Bohrspülschlämme enthalten üblicherweise zusammen mit der geschlossenen Ölphase die feindisperse wäßrige Phase in Mengen von etwa 5 bis 50 Gew.-%. Der disperse Wasseranteil der erfindungsgemäßen W/O-Invertemulsionen beträgt 5 bis 50 Gew.-%, insbesondere 10 bis 35 Gew.-%, und enthält vorzugsweise gelöste Salze von der Art CaCl₂ und/oder KCI und/oder wasserlösliche niedere mehrwertige Alkohole. Ferner ist es erfindungsgemäß bevorzugt, daß die disperse wäßrige Phase auf einen pH-Wert im Bereich von 7,5 bis 11 eingestellt ist. Neben dem Wassergehalt kommen alle für vergleichbare Spülungstypen vorgesehenen Additive, d. h. Hilfs- und Zuschlagstoffe, in Betracht, die im Sinne der vorliegenden Erfindung ökologisch verträglich und insbesondere frei von löslichen toxischen Schwermetallverbindungen sind. Diese Additive können wasserlöslich, öllöslich und/oder wasser- bzw. öldispergierbar sein.

Übliche Additive sind neben den erfindungsgemäß definierten Tonen beispielsweise Emulgatoren, fluid-loss-Additive, zusätzliche Strukturviskosität aufbauende lösliche und/oder unlöslichen Stoffe, Alkalireserven, Mittel zur Inhibierung des unerwünschten Wasseraustausches zwischen erbohrten Formationen - z.B. Wasser-quellbare Tone und/oder Salzschichten - und der Spülflüssigkeit, Netzmittel zum besseren Aufziehen der Ölphase auf Feststoffoberflächen, z.B. zur Verbesserung der Schmierwirkung, aber auch zur Verbesserung des oleophilen Verschlusses freigelegter Gesteinsformationen oder Gesteinsflächen, Biocide, beispielsweise zur Hemmung des bakteriellen Befalls der Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, a.a.0., Kapitel 11, "Drilling Fluid Components". Nur auszugsweise sei dementsprechend zitiert:

Feindisperse Zusatzstoffe zur Erhöhung der Spülungsdichte: Weit verbreitet ist das Bariumsulfat (Baryt), aber auch Calciumcarbonat (Calcit) oder das Mischcarbonat von Calcium und Magnesium (Dolomit) finden Verwendung.

Den unerwünschten Wasseraustausch mit beispielsweise Tonen inhibierende Zusatzstoffe: In Betracht kommen hier die aus dem Stand der Technik zu Öl-basierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommmen kann. Neuere Vorschläge sehen hier den Einsatz niederer wasserlöslicher Alkohole wie Glycerin und/oder Propandiol vor, siehe hierzu beispielsweise GB-A-2 223 255. Verwiesen sei beispielsweise auch auf die Veröffentlichungen in "Petroleum Engineer International", September 1987, 32-40 und "World Oil", November 1983, 93-97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Kalk ist ein besonders wichtiger Vertreter dieser Klasse. Art und Menge dieser basischen Komponenten sind dabei in bekannter Weise aufeinander abgestimmt.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

Unter Verwendung eines synthetisch gewonnenen und unter dem Handelsnamen "Dehydril^{R} HT" vertriebenen feinteiligen Tones auf Hectorit-Basis mit hoher Quellfähigkeit in wäßrigen Systemen wird eine 3 Gew.-%ige kollodiale Lösung mit Gelstruktur hergestellt. Die im nachfolgenden definierte oleophile und quartären Stickstoff enthaltende Komponente auf Esterquat-Basis wird bei Raumtemperatur und unter intensivem Rühren des thixotropen wäßrigen Geles in stöchiometrischem Überschuß während eines Zeitraums von etwa 0,5 Stunden eingerührt. Im Ausmaß der Zugabe der Esterquatverbindung zum wäßrigen Hectoritgel bricht die Gelstruktur zusammen. Das gebildete oleophile Umsetzungsprodukt flockt in der wäßrigen Phase aus. Anschließend wird eine Nachreaktion unter Rühren im Temperaturbereich von 40 bis 45 °C für weitere 0,5 Stunden durchgeführt.

Die jetzt entstandene Feststoffphase wird durch Filtrieren von der wäßrigen Phase abgetrennt, es wird mit Wasser nachgewaschen. Der Filterrückstand wird bei 70 °C getrocknet und anschließend zum feinpulvrigen Material zerkleinert.

Unter Verwendung dieses hydrophobierten synthetischen Tones als Viskositätsbildner wird ein Öl-basiertes Bohrspülsystem von W/O-Typ zusammengestellt, wobei die geschlossene Ölphase durch das im nachfolgenden definierte oleophile Carbonsäureestergemisch gebildet ist:

Estergemisch aus im wesentlichen gesättigten Fettsäuren auf Basis Palmkern und 2-Ethylhexanol, das zum weitaus überwiegenden Teil auf C_{12/14}-Fettsäuren zurückgeht und der folgenden Spezifikation entspricht:
C₈: 3,5 bis 4,5 Gew.-%
C₁₀: 3,5 bis 4,5 Gew.-%
C₁₂: 65 bis 70 Gew.-%
C₁₄: 20 bis 24 Gew.-%
C₁₆: ca. 2 Gew.-%
C₁₈: 0,3 bis 1 Gew.-%

Das Estergemisch liegt als hellgelbe Flüssigkeit mit einem Flammpunkt oberhalb 165 °C und einer Viskosität (Brookfield 20 °C) von 7 bis 9 cp (= 7 bis 9 mPas) vor.

Das W/O-Invert-Bohrspülungssystem wird gemäß der folgenden Grundrezeptur in an sich bekannter Weise zusammengestellt:
Zu 130 ml Carbonsäureester-Öl
6 g W/O-Emulgator (INVERMUL^{R} NT der Firma Baroid Drilling Fluids Inc.)
26 ml Wasser
6 g organophiler Hectorit gemäß der Erfindung
12 g organophiler Lignit (DURATONE^{R} der Firma Baroid Drilling Fluids Inc.)
2 g Kalk
6 g W/O-Emulgator (EZ-MUL^{R} NT der Firma Baroid Drilling Fluids Inc.)
346 g Baryt
9,2 g CaCl₂ · 2 H₂O

Am ungealterten und am gealterten Material werden die Viskositätskennwerte wie folgt bestimmt:

Messung der Viskosität bei 50 °C in einem Fann-35-Viskosimeter der Firma Baroid Drilling Fluids Inc. Es werden in an sich bekannter Weise bestimmt die Plastische Viskosität (PV) in mPas, die Fließgrenze (YP) in lb/100 ft² sowie die Gelstärke (lb/100 ft²) nach 10 sec und 10 min. Bestimmt wird weiterhin die Emulsionsstabilität (ES) in Volt (V).

Die Alterung der jeweiligen Bohrspülung wird durch Behandlung für den Zeitraum von 24 h bei 125 °C im Autoklaven - im sogenannten Roller-Oven - vorgenommen.

Die am ungealterten und gealterten Material bestimmten Kennzahlen - wie zuvor angegeben - sind in der nachfolgenden tabellarischen Zusammenfassung aufgeführt:

| Test | ungealtertes Material | gealtertes Material |
|---|---|---|
| plastische Viskosität (PV) | 31 | 41 |
| Fließgrenze (YP) | 9 (= 4,31 Pa) | 16 (= 7,66 Pa) |
| Gelstärke (lb/100 ft²) | | |
| 10 sec | 4 (= 1,92 Pa) | 3 (= 1,44 Pa) |
| 10 min | 4 (= 1,92 Pa) | 7 (= 3,35 Pa) |
| Emulsionsstabilität (ES) | 303 V | 1 004 V |

Als hydrophobierende Esterquatkomponente ist dabei das mit einer Methylgruppe quaternierte Umsetzungsprodukt aus Triethanolamin (TEA) und einem Fettsäuregemisch auf Kokosbasis - überwiegend gesättigte Fettsäuren des Bereiches C₁₂₋₁₈ - verwendet worden. Bei dieser Esterquatkomponente handelt es sich um ein Stoffgemisch, das zum überwiegenden Teil aus dem entsprechenden Diester des TEA und zum Rest aus Monoester und Triester des TEA gebildet ist.

## Patentansprüche

1. Verwendung von quaternierten oleophilen Estern aus Alkylolaminen und Carbonsäuren mit wenigstens 8 C-Atomen im Carbonsäure-Molekül (Esterquats) zur Hydrophobierung und Ausbildung der Ölbenetzbarkeit natürlicher und/oder synthetischer Tone für deren Einsatz in ölbasierten Flüssigphasen, insbesondere als Viskositätsbildner in fließfähigen Bohrhilfsmitteln vom Typ der W/O-Invertemulsionen.

2. Verwendung nach Anspruch 1, dadurch gekennzeichnet, daß Esterquats aus Monocarbonsäuren mit vorzugsweise wenigstens 12 C-Atomen und tert.-N aufweisenden Alkylolaminen mit mehr als einer OH-Gruppe, vorzugsweise 2 bis 5 und insbesondere 2 oder 3 OH-Gruppen im Alkylolaminmolekül verwendet werden.

3. Verwendung nach Ansprüchen 1 und 2, dadurch gekennzeichnet, daß Esterquats verwendet werden, die im Molekül mehr als einen Carbonsäurerest - vorzugsweise 2 oder 3 Carbonsäurereste - aufweisen.

4. Verwendung nach Ansprüchen 1 bis 3, dadurch gekennzeichnet, daß Esterquats eingesetzt werden, die sich von Alkylolaminen mit bis zu 15 C-Atomen, vorzugsweise mit bis zu 8 C-Atomen im Molekül und bevorzugt nicht mehr als 3 N-Gruppen, insbesondere mit einer tert.-N-Gruppe pro Molekül, ableiten.

5. Verwendung nach Ansprüchen 1 bis 4, dadurch gekennzeichnet, daß Esterquats auf Basis von Ethanolaminverbindungen, insbesondere quaternierte, mit Monocarbonsäuren teil- oder vollveresterte Triethanolamin-Verbindungen verwendet werden.

6. Verwendung nach Ansprüchen 1 bis 5, dadurch gekennzeichnet, daß Esterquats auf Basis geradkettiger Monocarbonsäuren, insbesondere C₁₂ oder höheren Carbonsäuren mit vorzugsweise bis zu 24 C-Atomen, die auch ein- und/oder mehrfach olefinisch ungesättigt sein können, eingesetzt werden, wobei Esterquats auf Basis entsprechender Carbonsäuren oder Carbonsäuregemische natürlichen Ursprungs bevorzugt sind.

7. Verwendung nach Ansprüchen 1 bis 6, dadurch gekennzeichnet, daß Esterquats verwendet werden, die durch an sich bekannte Quaternisierung mit Dialkylsulfat oder Alkylhalogenid aus den Alkylolaminestern hergestellt worden sind.

8. Verwendung nach Ansprüchen 1 bis 7, dadurch gekennzeichnet, daß die Esterquats auf quellfähigen Tonen vom Montmorillonit- oder Smectit-Typ, insbesondere Bentonit und/oder Hectorit, verwendet werden, die mit dieser Modifizierung bevorzugt als Viskositätsbildner und/oder Quellmittel in W/O-Invertbohrspülungen zum Niederbringen von Land- und/oder See-gestützten Gesteinsbohrungen verwendet werden.

9. Öldispergierbare Verdickungsmittel und gegebenenfalls weitere Inhaltsstoffe enthaltende W/O-Invertemulsionen, insbesondere entsprechende Bohrloch-Behandlungsmittel, die im Rahmen der Land- und/oder See-gestützten Gesteinserbohrung Verwendung finden können, dadurch gekennzeichnet, daß sie als öldispergierbare Verdickungsmittel feinteilige und mit den Esterquats nach Ansprüchen 1 bis 8 behandelte Tone natürlichen und/oder synthetischen Ursprungs enthalten.

10. W/O-Invertemulsionen nach Anspruch 9, dadurch gekennzeichnet, daß sie die mit Esterquats ausgerüsteten Tone zusammen mit hydriertem Rizinusöl als Verdicker enthalten.

11. W/O-Invertemulsionen nach Ansprüchen 9 und 10, dadurch gekennzeichnet, daß sie als im Temperaturbereich von 5 bis 20 °C fließ- und/oder pumpfähige Bohrlochbehandlungsmittel, insbesondere Bohrspülungen, ausgerüstet sind, deren geschlossene Ölphase aus ökologisch verträglichen Ölen, insbesondere aromaten-freien Mineralölen, oleophilen Estern, oleophilen Ethern und/oder oleophilen Alkoholen gebildet ist.

12. W/O-Invertemulsionen nach Ansprüchen 9 bis 11, dadurch gekennzeichnet, daß sie Ölphasen mit Flammpunkten oberhalb 100 °C, vorzugsweise oberhalb 135 °C aufweisen und daß beim Einsatz von Esterölen - insbesondere auf Basis von Mono- und gegebenenfalls Polycarbonsäuren und/oder auf Kohlensäureester-Basis - die im Esteröl vorliegenden Reste monofunktioneller Alkohole so ausgewählt sind, daß bei einer im Gebrauch partiell auftretenden Esterhydrolyse im praktischen Betrieb inhalations-toxikologisch unbedenkliche Alkohole gebildet werden.

13. W/O-Invertemulsionen nach Ansprüche 9 bis 12, dadurch gekennzeichnet, daß auch die weiteren mitverwendeten üblichen Hilfs- und Zuschlagsstoffe frei von löslichen toxischen Schwermetallverbindungen sind, wobei als ökologisch verträgliche Emulgatoren insbesondere entsprechende Verbindungen aus den Klassen der Alkylglykoside, der Disalze und/oder der Hydroxylgruppen enthaltenden Komplexester eingesetzt werden.

14. W/O-Invertemulsionen nach Ansprüchen 9 bis 13, dadurch gekennzeichnet, daß ihre wäßrige disperse Phase auf einen pH-Wert im Bereich von 7,5 bis 11, eingestellt ist.

15. W/O-Invertemulsionen nach Ansprüchen 9 bis 14, dadurch gekennzeichnet, daß ihr disperser Wasseranteil 5 bis 50 Gew.-%, bevorzugt 10 bis 35 Gew.-%, ausmacht und insbesondere Salze von der Art CaCl₂ und/oder KCl und/oder wasserlösliche niedere mehrwertige Alkohole gelöst enthält.

16. W/O-Invertemulsionen nach Ansprüchen 9 bis 15, dadurch gekennzeichnet, daß die Ölphase der Invertemulsion im Temperaturbereich von 0 bis 5 °C eine Brookfield (RVT)-Viskosität unterhalb 50 mPas, vorzugsweise nicht über 40 mPas aufweist.

17. W/O-Invertemulsionen nach Ansprüchen 9 bis 16, dadurch gekennzeichnet, daB sie eine Plastische Viskosität (PV) im Bereich von 10 bis 60 mPas und eine Fließgrenze (Yield Point, YP) im Bereich von 5 bis 40 lb/100 ft² (= 2,39 bis 19,15 Pa) - jeweils bestimmt bei 50 °C - aufweisen.

## Claims

1. The use of quaternized oleophilic esters of alkylol amines and carboxylic acids containing at least 8 carbon atoms in the carboxylic acid molecule (esterquats) for hydrophobicizing and developing the oil wettability of natural and/or synthetic clays for use in oil-based liquid phases, more particularly as thickeners in drilling fluids of the w/o invert emulsion type.

2. The use claimed in claim 1, characterized in that esterquats of monocarboxylic acids preferably containing at least 12 carbon atoms and alkylol amines containing tertiary N and more than one OH group, preferably 2 to 5 and more preferably 2 or 3 OH groups, in the alkylol amine molecule are used.

3. The use claimed in claims 1 and 2, characterized in that esterquats containing more than one carboxylic acid residue and preferably 2 or 3 carboxylic acid residues in the molecule are used.

4. The use claimed in claims 1 to 3, characterized in that esterquats derived from alkylol amines containing up to 15 carbon atoms and preferably up to 8 carbon atoms in the molecule and preferably no more than 3 N groups and, more preferably, one tert.N group per molecule are used.

5. The use claimed in claims 1 to 4, characterized in that esterquats based on ethanolamine compounds, more particularly quaternized triethanolamine compounds partly or fully esterified with monocarboxylic acids, are used.

6. The use claimed in claims 1 to 5, characterized in that esterquats based on linear monocarboxylic acids, more particularly C₁₂ or higher carboxylic acids preferably containing up to 24 carbon atoms, which may also be mono- and/or polyolefinically unsaturated, are used, esterquats based on corresponding carboxylic acids or carboxylic acid mixtures of natural origin being preferred.

7. The use claimed in claims 1 to 6, characterized in that esterquats which have been produced from the alkylol amine esters by quaternization known per se with dialkyl sulfate or alkyl halide, are used.

8. The use claimed in claims 1 to 7, characterized in that the esterquats are used on swellable clays of the montmorillonite or smectite type, more particularly bentonite and/or hectorite, which with this modification are preferably used as thickeners and/or swelling agents in w/o invert drilling muds for land- and/or sea-supported rock drilling.

9. Oil-dispersible w/o invert emulsions containing thickeners and optionally other ingredients, more particularly corresponding borehole servicing fluids, which may be used in land- and/or sea-supported rock drilling, characterized in that they contain fine-particle clays of natural and/or synthetic origin treated with the esterquats claimed in claims 1 to 8 as oil-dispersible thickeners.

10. W/o invert emulsions as claimed in claim 9, characterized in that they contain the clays treated with esterquats together with hydrogenated castor oil as thickeners.

11. W/o invert emulsions as claimed in claims 9 and 10, characterized in that they are treated as borehole servicing fluids, more particularly drilling muds, flowable and/or pumpable at temperatures of 5 to 20°C, of which the continuous oil phase is formed by ecologically compatible oils, more particularly dearomaticized mineral oils, oleophilic esters, oleophilic ethers and/or oleophilic alcohols.

12. W/o invert emulsions as claimed in claims 9 to 11, characterized in that they have oil phases with flash points above 100°C and preferably above 135°C and in that, where ester oils, particularly ester oils based on mono- and optionally polycarboxylic acids and/or carbonic acid esters, are used, the residues of monohydric alcohols present in the ester oil are selected so that no inhalation-toxicologically harmful alcohols are formed in the event of partial ester hydrolysis in practical application.

13. W/o invert emulsions as claimed in claims 9 to 12, characterized in that the other typical auxiliaries and additives used are free from soluble toxic heavy metal compounds, the ecocompatible emulsifiers used being in particular corresponding compounds from the classes of alkyl glycosides, disalts and/or hydroxyfunctional complex esters.

14. W/o invert emulsions as claimed in claims 9 to 13, characterized in that their aqueous disperse phase is adjusted to a pH value of 7.5 to 11.

15. W/o invert emulsions as claimed in claims 9 to 14, characterized in that their dispersed water content makes up 5 to 50% by weight and preferably 10 to 35% by weight and, in particular, contains dissolved salts of the CaCl₂ and/or KCl type and/or water-soluble lower polyhydric alcohols.

16. W/o invert emulsions as claimed in claims 9 to 15, characterized in that the oil phase of the invert emulsion has a Brookfield (RVT) viscosity at 0 to 5°C below 50 mPas and preferably not more than 40 mPas.

17. W/o invert emulsions as claimed in claims 9 to 16, characterized in that they have a plastic viscosity (PV) in the range from 10 to 60 mPas and a yield point (YP) in the range from 5 to 40 lb/100 ft² (= 2.39 to 19.15 Pa), as determined at 50°C in either case.

## Revendications

1. Utilisation d'esters oléophiles quaternisés à base dialkylolamines et d'acides carboxyliques ayant au moins 8 atomes de carbone dans la molécule d'acide carboxylique (esterquats) en vue de rendre hydrophobe et de développer le mouillage par l'huile, d'argiles naturelles et/ou synthétiques pour leur utilisation dans des phases liquides à base d'huile, en particulier comme agent de formation de la viscosité dans des adjuvants de forage aptes à l'écoulement, du type des émulsions inverses W/O.

2. Utilisation selon la revendication 1,
caractérisée en ce qu'
on emploie des esterquats à base d'acides monocarboxyliques ayant de préférence au moins 12 atomes de carbone et d'alkylolamines possédant un azote tertiaire avec plus d'un groupe OH, de préférence de 2 à 5 et en particulier 2 ou 3 groupes OH dans la molécule d'alkylolamine.

3. Utilisation selon les revendications 1 et 2,
caractérisée en ce qu'
on emploie des esterquats qui possèdent dans la molécule plus d'un radical acide carboxylique de préférence 2 ou 3 radicaux acide carboxylique.

4. Utilisation selon les revendications 1 à 3,
caractérisée en ce qu'
on met en oeuvre des esterquats qui dérivent d'alkylolamines ayant jusqu'à 15 atomes de carbone, de préférence ayant jusqu'à 8 atomes de carbone dans la molécule et de préférence pas plus de 3 groupes N, en particulier ayant un groupe N tertiaire par molécule.

5. Utilisation selon les revendications 1 à 4,
caractérisée en ce qu'
on utilise des esterquats à base de dérivés d'éthanolamine en particulier des dérivés de triéthanolamine quaternisés, partiellement ou complètement estérifiés par des acides monocarboxyliques.

6. Utilisation selon les revendications 1 à 5,
caractérisée en ce qu'
on met en oeuvre des esterquats à base d'acides monocarboxyliques à chaîne droite, en particulier des acides carboxyliques en C₁₂ et supérieurs, ayant de préférence jusqu'à 24 atomes de carbone, qui peuvent être aussi une et/ou plusieurs fois oléfiniquement non saturés, pour lesquels des esterquats à base d'acide carboxylique correspondant ou de mélanges d'acides carboxyliques d'origine naturelle sont préférés.

7. Utilisation selon les revendications 1 à 6,
caractérisée en ce qu'
on met en oeuvre des esterquats qui ont été produits par quaternisation connue en soi, avec un sulfate de dialkyle ou un halogénure d'alkyle à partir des esters d'alkylolamine.

8. Utilisation selon les revendications 1 à 7,
caractérisée en ce qu'
on utilise les esterquats à partir d'argiles susceptibles de gonfler, du type Montmorillonite ou smectite, en particulier de la bentonite et/ou de l'hectorite, qui sont utilisés avec cette modification de préférence comme agent formateur de viscosité et/ou agent de gonflement dans des boues de forage inverses W/O en vue du forage de puits, de forages de rocher basés sur la terre et/ou sur la mer.

9. Emulsions inverses W/O contenant des agents épaississants dispersibles dans l'huile et le cas échéant d'autres ingrédients, en particulier des agents de traitement pour trou de forage correspondants qui peuvent trouver dans le cadre du forage de rocher sur la terre et/ou dans la mer une utilisation,
caractérisées en ce qu'
elles renferment comme agents d'épaississement dispersibles dans l'huile, des argiles finement divisées et traitées selon les revendications 1 à 8 par les esterquats, d'origine naturelle et/ou synthétique.

10. Emulsions inverses W/O selon la revendication 9,
caractérisées en ce qu'
elles renferment les argiles pourvues des esterquats conjointement avec de l'huile de ricin hydrogénée comme agent d'épaississement.

11. Emulsions inverses W/O selon les revendications 9 et 10,
caractérisées en ce qu'
elles sont pourvues comme agent de traitement pour trou de forage apte à l'écoulement et/ou au pompage dans la zone de température de 5 à 20°C, en particulier des boues de forage dont la phase huileuse continue est formée d'huiles compatibles d'un point de vue écologique, en particulier des huiles minérales dépourvues d'aromatiques, des esters oléophiles, des éthers oléophiles et/ou des alcools oléophiles.

12. Émulsions inverses W/O selon les revendications 9 à 11,
caractérisées en ce qu'
elles possèdent des phases huileuses avec des points d'inflammation au-dessus de 100°C, de préférence au-dessus de 135°C et en ce que lors de l'utilisation d'huiles estérifiées, en particulier à base d'acides mono- et éventuellement polycarboxyliques et/ou à base d'ester d'acide carbonique, les radicaux d'alcools monofonctionnels présents dans l'huile estérifiée sont choisis de telle sorte que lors d'une hydrolyse de l'ester qui se produit partiellement dans l'utilisation des alcools inoffensifs du point ae vue toxicologie de l'inhalation sont formés dans le fonctionnement pratique.

13. Emulsions inverses W/O selon les revendications 9 à 12,
caractérisées en ce qu'
également les adjuvants et les additifs usuels supplémentaires utilisés conjointement sont dépourvus de dérivé de métal lourd toxique soluble, dans lesquelles on met en oeuvre comme agents émulsionnants compatibles écologiquement, en particulier des composés correspondants choisis dans les classes des alkylglycosides de leurs disels et/ou de leurs esters complexes contenant des groupes hydroxyle.

14. Emulsions inverses W/O selon les revendications 9 à 13,
caractérisées en ce qu'
on ajuste leur phase aqueuse disperse à une valeur de pH dans la zone de 7,5 à 11.

15. Emulsions inverses W/O selon les revendications 9 à 14,
caractérisées en ce que
leur quantité d'eau dispersée représente de 5 à 50 % en poids, de préférence de 10 à 35 % en poids et renferme en particulier des sels du type Cl₂Ca, et/ou ClK et/ou des alcools plurivalents inférieurs solubles dans l'eau, dissous.

16. Emulsions inverses W/O selon les revendications 9 à 15,
caractérisées en ce que
la phase huileuse de l'émulsion inverse possède dans la zone de température de 0 à 5°C, une viscosité Brookfield (RVT) en dessous de 50 mPa.s de préférence pas au-dessus de 40 mPa.s.

17. Emulsions inversés W/O selon les revendications 9 à 16,
caractérisées en ce qu'
elles manifestent une viscosité plastique (PV) dans la zone allant de 10 à 60 mPa.s et une limite d'écoulement (Yield point YP) dans la zone de 5 à 40 lb/100 ft² (= 2,39 à 19,15 Pa) à chaque fois déterminé à 50°C.
